# EUROPEAN PATENT SPECIFICATION

(11) **EP 2 587 660 B1**
(45) Date of publication and mention of the grant of the patent: **08.05.2019**
(21) Application number: 11798130.8
(22) Date of filing: 21.06.2011
(51) Int. Cl.: H02M 7/797, H02M 7/12, H02M 7/48, H02P 27/06, B29C 45/76, H02M 5/458

(54) **INJECTION MOLDING MACHINE AND POWER SOURCE REGENERATION CONVERTER**
SPRITZGIESSMASCHINE UND WANDLER ZUR STROMQUELLENWIEDERHERSTELLUNG
MACHINE DE MOULAGE PAR INJECTION ET CONVERTISSEUR À RÉCUPÉRATION POUR SOURCE D'ALIMENTATION

(30) Priority: 23.06.2010 JP 2010142641
(43) Date of publication of application: 01.05.2013
(73) Proprietor: Sumitomo Heavy Industries, Ltd., Tokyo 141-6025 (JP)
(72) Inventor: MORITA, Hiroshi, Yokosuka-shi Kanagawa 237-8555 (JP); MIZUNO, Hiroyuki, Yokosuka-shi Kanagawa 237-8555 (JP); ABE, Yoshifuru, Yokosuka-shi Kanagawa 237-8555 (JP); KATOH, Atsushi, Yokosuka-shi Kanagawa 237-8555 (JP); OKADA, Noritaka, Yokosuka-shi Kanagawa 237-8555 (JP)
(74) Representative: Hoffmann Eitle
(86) International application number: PCT/JP2011/064145
(87) International publication number: WO 2011/162246

(56) References cited:
- CA-A1- 2 734 699
- JP-A- 4 244 798
- JP-A- 9 163 751
- JP-A- 63 194 596
- US-A1- 2006 044 848
- US-A1- 2009 052 209
- US-A1- 2009 230 903
- US-A1- 2010 052 598

## Description

### BACKGROUND OF THE INVENTION

### 1. Field of the Invention

The present invention relates to an injection molding machine including a power supply regenerative converter connected between an alternating current (AC) power supply and an inverter, and to the power supply regenerative converter.

### 2. Description of the Related Art

Conventionally, a power supply regenerative converter connected between an AC power supply and an inverter for driving a motor is known. The power supply regenerative converter monitors by a hysteresis comparator a difference between a direct current (DC) voltage of a DC link capacitor and a peak voltage value of the AC power supply. Also, the power supply regenerative converter starts a power supply regenerative operation if the DC voltage exceeds a first threshold value. Then, the power supply regenerative converter stops the power supply regenerative operation if the DC voltage falls below a second threshold value (which is less than the first threshold value).

To this, another power supply regenerative converter is known (see Patent Document 1 for example). The power supply regenerative converter switches its power-running operation and its power supply regenerative operation depending on two judgment results. One of the judgment results relates to a state of transfer of electric power (hereinafter referred to as an "electric power state") among an AC power supply, a motor, and the power supply regenerative converter based on "input current information" which is magnitude of an alternating current and a phase of an AC voltage concerning the AC power supply. The other of the judgment results relates to an electric power state based on "DC voltage information" which is a DC voltage of a DC link capacitor.

This electric power regenerative converter starts a power supply regenerative operation if it detects, based on the DC voltage information, a state where electric power generated by a motor flows into the DC link capacitor (hereinafter referred to as a "motor regenerative state"). Then, the electric power regenerative converter continues the power supply regenerative operation over a predetermined time period independently of a subsequent variation in the DC voltage.

Then, after a lapse of the predetermined time period, this electric power regenerative converter performs another judgment of the electric power state based on the DC voltage information, and a judgment of the electric power state based on the input current information which takes a relatively long time to stabilize its judgment result. The electric power regenerative converter continues the power supply regenerative operation further if it detects the motor regenerative state in at least one of the judgment results.

In this way, this power supply regenerative converter prevents a chattering (a phenomenon in which it switches the power-running operation and the power supply regenerative operation frequently) caused by the hysteresis comparator from arising when it starts the power supply regenerative operation.

US 2010/052598 A1 describes a smoothing capacitor for storing an induced electromotive force generated by a three-phase induction motor, a regenerative transistor for switching a terminal voltage of the smoothing capacitor to carry out a power regenerating operation over a three-phase AC power supply, a line voltage detecting portion for detecting a line voltage of the three-phase AC power supply, a fundamental waveform generating portion for generating, from a signal output from the line voltage detecting portion, a fundamental waveform defined to be a line voltage waveform of the three-phase AC power supply in which a source voltage distortion component is not mixed, a base driving signal creating portion for creating a base driving signal to be used for an ON/OFF control of the regenerative transistor based on a signal output from the fundamental waveform generating portion, and a base driving signal output portion for outputting the base driving signal.

US 2006/0044848 A1 describes a converter including a converter circuit having a plurality of bridge-connected semiconductor switching devices for converting AC power into DC power, a smoothing condenser connected in parallel to the DC side of the converter circuit and a current detector provided in a condenser circuit to control a condenser current flowing through the smoothing condenser to be a set value. The condenser current is controlled to be the set value (e.g. zero) to thereby reduce the capacity of the smoothing condenser and make the converter small.

JP 09 163751 A describes a situation occurring when a regenerative current flows into a PWM controlled self-excited rectifier, the output of the regulation calculation unit of a voltage regulator is reduced and approaches a regenerating region. If a DC voltage between both the ends of a capacitor exceeds a limit value, a value which is obtained by adding the output value of the regulation calculation unit to a negative maximum current limit value is used as the input value of the limit calculation unit of the voltage regulator. This disclosure aims to suppress the rise of the DC voltage of the output of a PWM control self-excited rectifier by a method wherein a current instruction value is quickly switched to the value of a regenerative current direction when the DC voltage exceeds a limit value. A current instruction value is put into a regenerative state and the DC voltage across the capacitor starts decreasing. If the DC voltage across the capacitor is reduced to be below a limit value, the current instruction value is switched to the output value of the regulation calculation unit. By repeating the above mentioned procedure, the DC voltage across the capacitor is suppressed to the value below the limit value even if the regenerative current keeps on flowing into the PWM control self-excited rectifier.

See also CA 2,734,699 A1 (published 25 February 2010), US 2009/230903 A1 (published 17 September 2009) and US 2009/052209 A1 (published 26 February 2009).

### PRIOR ART DOCUMENTS

### PATENT DOCUMENTS

Patent Document 1: JP1999-289794A

### SUMMARY OF THE INVENTION

### PROBREM TO BE SOLVED BY THE INVENTION

However, both the conventional power supply regenerative converter and the power supply regenerative converter in Patent Document 1 passes a certain amount of alternating current from the power supply regenerative converter to an AC power supply as soon as it starts the power supply regenerative operation independently of magnitude of the electric power at the motor. Thus, they cause a drop in a DC voltage of the DC link capacitor if electric power regenerated from the power supply regenerative converter to the AC power supply is greater than the electric power regenerated from the inverter to the power supply regenerative converter.

Also, if a value of the DC voltage of the DC link capacitor temporally exceeds the above threshold value due to a noise or the like and the power supply regenerative operation is started accidentally, the conventional power supply regenerative converter inevitably causes chattering, and the power supply regenerative converter in Patent Document 1 causes a significant drop in a DC voltage value in the DC link capacitor.

To this, both the conventional power supply regenerative converter and the power supply regenerative converter in Patent Document 1 have to set the threshold value to a rather high value to prevent the power supply regenerative operation from being started accidentally. As a result, they delay an initiation of the power supply regenerative operation, and make it difficult to perform the power supply regenerative operation more efficiently.

In view of the above, the present invention is intended to provide an injection molding machine including a power supply regenerative converter which is able to perform a power supply regenerative operation more efficiently and to provide the power supply regenerative converter.

### MEANS TO SOLVE THE PROBLEM

To achieve the above objective, a power supply regenerative converter according to claim 1 is a power supply regenerative converter connected between an alternating current power supply and an inverter, comprising: an electric power conversion part configured to bidirectionally convert between an alternating current electric power and a direct current electric power; a direct current voltage detector configured to detect a direct current voltage of a capacitor between the inverter and the electric power conversion part; and an alternating current control part configured to output a control signal, produced based on a voltage difference between a direct current voltage detected by the direct current voltage detector and a predetermined voltage, to the electric power conversion part, and configured to control an alternating current flowing between the alternating current power supply and the electric power conversion part wherein, in a case where an electric power regenerated to the capacitor is greater than or equal to an electric power corresponding to the maximum allowable value of an alternating current flowing to the alternating current power supply, the power supply regenerative converter sets an alternating current flowing from the electric power conversion part to the alternating current power supply to the maximum allowable value, and stores an electric power corresponding to a difference between an electric power regenerated to the capacitor and an electric power regenerated from the electric power conversion part to the alternating current power supply in the capacitor.

An injection molding machine according to an embodiment of the present invention is an injection molding machine including the power supply regenerative converter.

It is preferable that the alternating current control part outputs to the electric power conversion part a control signal to cancel out the voltage difference.

It is also preferable that the alternating current control part outputs a control signal, which is produced based on a voltage difference between a direct current voltage detected by the direct current voltage detector and a predetermined voltage as well as based on time variance of the direct current voltage, to the electric power conversion part, and controls an alternating current flowing between the alternating current power supply and the electric power conversion part.

Also, it is preferable that the control signal is outputted so that an alternating current is prevented from flowing from the alternating current power supply to the electric power conversion part, if the direct current voltage is greater than the predetermined voltage.

### EFFECT OF THE INVENTION

By the above means, the present invention is able to provide an injection molding machine including a power supply regenerative converter which is able to perform a power supply regenerative operation more efficiently and to provide the power supply regenerative converter.

### BRIEF DESCRIPTION OF THE DRAWINGS

Fig. 1 is a diagram showing a configuration of a main part of an injection molding machine according to an embodiment of the present invention.
FIG. 2 is a functional block diagram showing a configuration example of a power supply regenerative converter mounted on an injection molding machine according to an embodiment of the present invention.
FIG. 3 is a diagram showing time variances of the electric power at the motors, the electric power regenerated to a power supply, and a DC voltage, in the power supply regenerative converter in FIG. 2.
FIG. 4 is a flowchart showing a flow of the electric power conversion control process in the power supply regenerative converter in FIG. 2.
FIG. 5 is a functional block diagram showing another configuration example of a power supply regenerative converter mounted on an injection molding machine according to an embodiment of the present invention.
FIG. 6 is a diagram showing time variances of the electric power at the motors, the electric power regenerated to a power supply, and a DC voltage, in the power supply regenerative converter in FIG. 5.
FIG. 7 is a flowchart showing a flow of the electric power conversion control process in the power supply regenerative converter in FIG. 5.

### MODE FOR CARRYING OUT THE INVENTION

With reference to the drawings, embodiments of the present invention are described in the following.

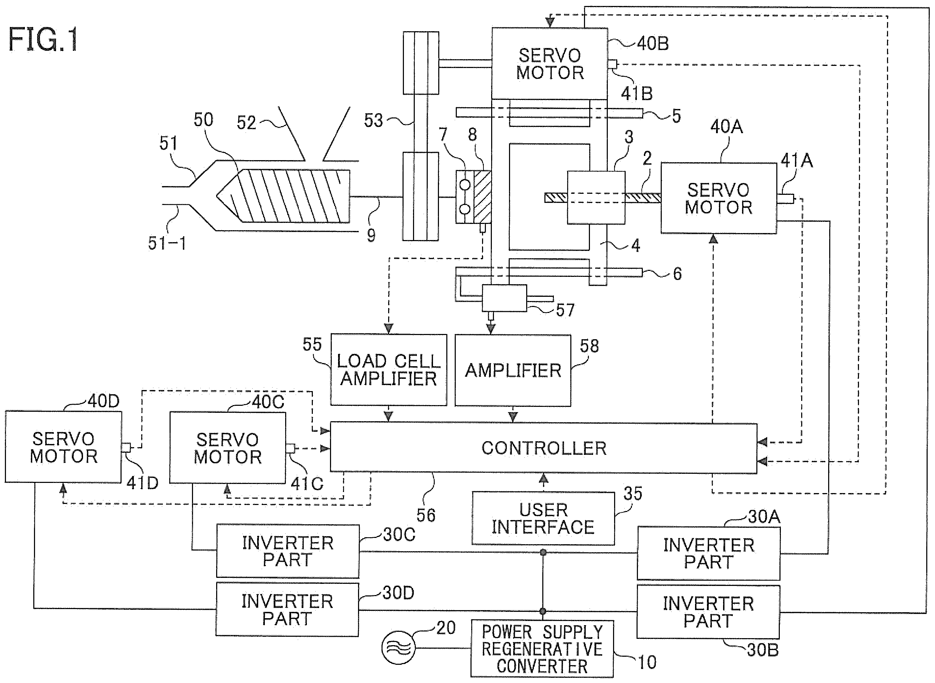

FIG. 1 is a diagram showing a configuration of a main part of an example of an injection molding machine according to an embodiment of the present invention.

The injection molding machine is an electric injection molding machine having a servo motor 40A for injection. Rotation of the servo motor 40A for injection is conveyed to a ball screw 2. A nut 3 moving back and forth due to the rotation of the ball screw 2 is fixed to a pressure plate 4. The pressure plate 4 is movable along guide bars 5, 6 fixed to a base frame (not shown). The back and forth movement of the pressure plate 4 is conveyed to a screw 50 via a bearing 7, a load cell 8, and an injection axis 9. The screw 50 is arranged in a heating cylinder 51 rotatably and axially movably. At the back of the screw 50 in the heating cylinder 51, a hopper 52 for feeding resin is provided. Rotation of a servo motor 40B for screw rotation is conveyed to the injection axis 9 via connecting members 53 such as a belt, a pulley, and the like. That is, the injection axis 9 is rotary driven by the servo motor 40B for screw rotation, and in turn, the screw 50 is rotated.

In the plasticizing/dosing process, the rotating screw 50 moves backward in the heating cylinder 51. Thus, melted resin is stored at the front of the screw 50, i.e., at the side of a nozzle 51-1 of the heating cylinder 51. In the injection process, a molding is conducted by filling melted resin stored at the front of the screw 50 into a mold and pressurizing the filled resin. At this moment, force pushing the resin is detected by the load cell 8 as reaction force- That is, the pressure of resin at the front of the screw 50 is detected. A detected value of the pressure is amplified by a load cell amplifier 55, and then entered into a controller (control device) 56 which functions as a control means. In the pressure keeping process, resin filled into the mold is kept under a predetermined pressure.

A position detector 57 which is configured to detect movement of the screw 50 is attached to the pressure plate 4. A detected signal of the position detector 57 is amplified by an amplifier 58, and then entered into the controller 56. This detected signal may be used to detect a moving speed of the screw 50.

The servo motors 40A, 40B are provided with encoders 41A, 41B to detect numbers of revolutions, respectively. The numbers of revolutions detected by the encoders 41A, 41B are entered into the controller 56, respectively.

A servo motor 40C is a servo motor for mold opening and closing. A servo motor 40D is a servo motor for product ejection (i.e., for an ejector). The servo motor 40C achieves the mold opening and closing by driving, for example, a toggle link (not shown). The servo motor 40D achieves the product ejection by moving an ejector rod (not shown) by means of, for example, a ball screw mechanism. The servo motors 40C, 40D are provided with encoders 41C, 41D to detect numbers of revolutions, respectively. The numbers of revolutions detected by the encoders 41C, 41D are entered into the controller 56, respectively.

The controller 56 is built around a micro computer. The controller 56 includes, for example, a CPU, a ROM for storing a control program and the like, a readable and writable RAM for storing a computation result and the like, a timer, a counter, an input interface, an output interface, and the like.

The controller 56 sends out current commands (torque commands) according to each of the plural processes to each of the servo motors 40A-40D. For example, the controller 56 achieves the plasticizing/dosing process by controlling the number of revolutions of the servo motor 40B. Also, the controller 56 achieves the injection process and the pressure keeping process by controlling the number of revolutions of the servo motor 40A. Similarly, the controller 56 achieves the mold opening process and the mold closing process by controlling the number of revolutions of the servo motor 40C. Moreover, the controller 56 achieves the product ejecting process by controlling the number of revolutions of the servo motor 40D.

A user interface 35 is provided with an input setting part by which a user can configure a molding condition for each molding process such as the mold opening and closing processes, the injection process, and the like. Also, for an after-mentioned electric power consumption calculation, the user interface 35 is provided with an input part to input a molding condition for each molding process such as the mold opening and closing processes, the injection process, and the like. In addition, the user interface 35 is provided with an input part to input a variety of instructions by the user, and an output part (e.g., a display part) to output a variety of information to the user.

Typically, one cycle of injection molding in the injection molding machine includes a mold closing process to close a mold, a mold clamping process to clamp the mold, a nozzle touch process to press the nozzle 51-1 against a sprue (not shown) of the mold, an injection process to inject melted material stored at the front of the screw 50 into a mold cavity (not shown) by advancing the screw 50 in the heating cylinder 51, a pressure keeping process to apply hold pressure for a while in order to inhibit generation of air bubbles and dents due to mold shrinkage, a plasticizing/dosing process to melt resin and store resin at the front of the heating cylinder 51 by rotating the screw 50 for a next cycle while the melted material filled in the mold cavity is cooled and solidified, a mold opening process to open the mold in order to eject the solidified product from the mold, and a product ejecting process to eject the product by an ejector pin (not shown) installed in the mold.

The power supply regenerative converter 10 is configured to convert an AC power of an AC power supply 20 into a DC power. For example, the power supply regenerative converter 10 is mounted on an injection molding machine, and connected between the AC power supply 20 and plural inverter parts 30A, 30B, ··· (hereinafter also collectively referred to as "inverter parts 30". The same goes for "motors 40", after-mentioned "electric power conversion parts 31", and after-mentioned "capacitors 32".).

The AC power supply 20 is, for example, a commercial three phase AC power supply. The AC power supply 20 supplies the power supply regenerative converter 10 with an alternating current.

The inverter parts 30 are configured to convert a DC power from the power supply regenerative converter 10 into an AC power, and to supply a variety of loads with the AC power, respectively. For example, the inverter parts 30 are servo cards including electric power conversion parts 31 (31A, 31B, ···) consisting of a switching element which can bidirectionally convert between a DC power and an AC power, and capacitors 32 (32A, 32B, ···). The inverter parts 30 supply each of the motors 40 (40A, 40B, ···) with an alternating current. In the present embodiment, the inverter part 30A is connected to the servo motor 40A for injection, the inverter part 30B is connected to the servo motor 40B for screw rotation, the inverter part 30C is connected to the servo motor 40C for mold opening and closing, and the inverter part 30D is connected to the servo motor 40D for an ejector. The power supply regenerative converter 10 may be connected to one and only inverter part 30.

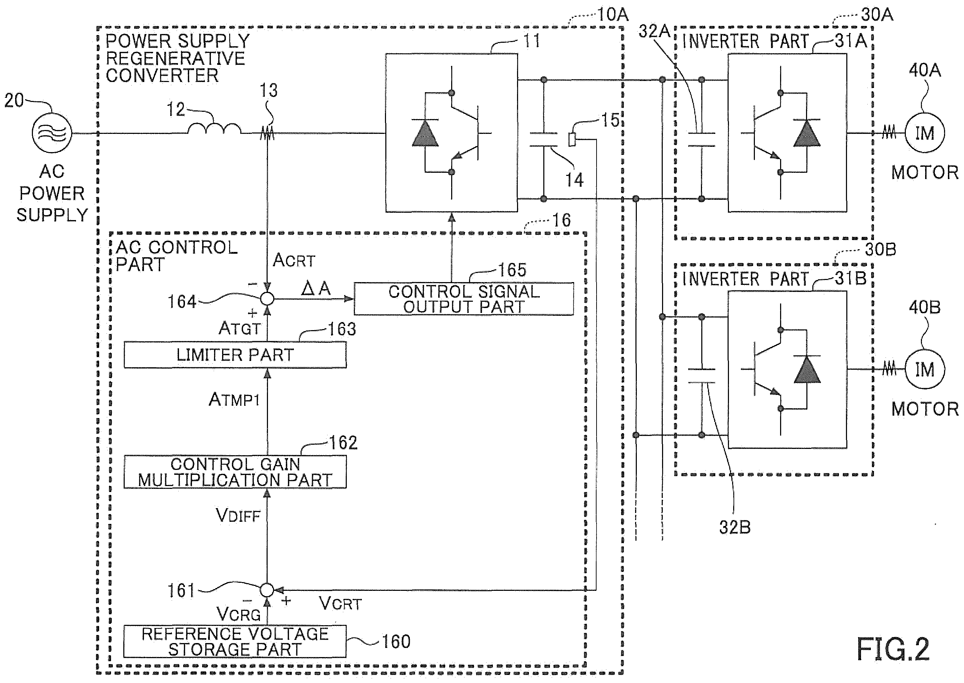

FIG. 2 is a functional block diagram showing a configuration example of the power supply regenerative converter 10 mounted on an injection molding machine according to an embodiment of the present invention.

The power supply regenerative converter 10 includes an electric power conversion part 11, an AC reactor 12, an AC detector 13, a DC link capacitor 14, a DC voltage detector 15, and an AC control part 16.

The electric power conversion part 11 is configured to bidirectionally convert between an AC power and a DC power. For example, the electric power conversion part 11 is a switching element consisting of an Insulated Gate Bipolar Transistor (IGBT).

Specifically, the electric power conversion part 11 performs a conversion operation from a DC power in the DC link capacitor 14 into an AC power in the AC power supply 20 (i.e., a power supply regenerative operation) by means of a Pulse Width Modulation (PWM) control according to a control signal from an after-mentioned AC control part 16. Then, in the power supply regenerative operation, the electric power conversion part 11 controls the magnitude of an AC power (an alternating current) between the AC power supply 20 and the electric power conversion part 11 as well as the magnitude of a DC power (a DC voltage) between the DC link capacitor 14 and the electric power conversion part 11. Also, the electric power conversion part 11 performs a conversion operation from an AC power into a DC power in the DC link capacitor 14 (i.e., a power-running operation) by means of a diode rectification.

The AC reactor 12 is a passive element utilizing a winding wire. For example, as one of its functions, the AC reactor 12 inhibits a harmonic current flowing from the power supply regenerative converter 10 to the AC power supply 20 during the power supply regenerative operation.

The AC detector 13 is configured to detect the magnitude of an alternating current flowing between the electric power conversion part 11 and the AC power supply 20. The AC detector 13 outputs its detection value to the after-mentioned AC control part 16. Also, the AC detector 13 detects and outputs an AC value at a predetermined frequency, and stores and retains in a storage medium such as a RAM each of values detected at the predetermined frequency over a predetermined time period. Also, in the present embodiment, this alternating current is represented as a positive value if it flows from the power supply regenerative converter 10 to the AC power supply 20, and represented as a negative value if it flows from the AC power supply 20 to the power supply regenerative converter 10.

The DC link capacitor 14 is configured to charge a DC power transferred to and from the inverter parts 30. By the power supply regenerative converter 10, electric power is supplied to the DC link capacitor 14 from the AC power supply 20 so that the DC link capacitor 14 can maintain a predetermined voltage value (e.g., a crest value of power supply voltage of the AC power supply 20, hereinafter referred to as "charging voltage V_{CRG}".).

The DC voltage detector 15 is configured to detect a DC voltage of the DC link capacitor 14. The DC voltage detector 15 outputs its detection value to the after-mentioned AC control part 16. Also the DC voltage detector 15 detects and outputs a DC voltage value at a predetermined frequency, and stores and retains in a storage medium such as a RAM each of values detected at the predetermined frequency over a predetermined time period.

The AC control part 16 is configured to control the direction and magnitude of an alternating current between the electric power conversion part 11 and the AC power supply 20. For example, the AC control part 16 is a computer including a CPU, a RAM, a ROM, a NVRAM, and the like. The AC control part 16 stores in the ROM programs corresponding to each of a reference voltage storage part 160, a computation part 161, a control gain multiplication part 162, a limiter part 163, a computation part 164, and a control signal output part 165. Then, the AC control part 16 causes the CPU to perform processes corresponding to each of the above parts, and outputs a control signal to the electric power conversion part 11 in order to achieve a desired direction and a desired magnitude of an alternating current.

Also, the above parts in the AC control part 16 may be comprised of hardware by means of an analog circuit, a digital circuit, a Programmable Logic Device (PLD), a Field Programmable Gate Array (FPGA), a Field Programmable Analog Array (FPAA), or the like.

Also, in the present embodiment, the AC control part 16 is configured as a functional element installed in the power supply regenerative converter 10. However, the AC control part 16 may be configured as a functional element installed in the controller 56 (see FIG. 1).

The reference voltage storage part 160 is an element to store a reference voltage. For example, the reference voltage storage part 160 is a storage area defined at a non-volatile storage medium such as a NVRAM, a ROM, or the like. The storage area can be either rewritable or non-rewritable.

The reference voltage is a voltage value which defines a condition to start or stop the power supply regenerative operation. The power supply regenerative converter 10 starts the power supply regenerative operation if a DC voltage of the DC link capacitor 14 has exceeded the reference voltage. Subsequently, the power supply regenerative converter 10 stops the power supply regenerative operation if the DC voltage has fallen below the reference voltage.

In the present embodiment, the reference voltage is set to the charging voltage V_{CRG}. This is to start a power supply regenerative operation as early as possible in a case where electric power generated by the motors 40 is regenerated to the DC link capacitor 14. The DC link capacitor 14 normally has a charging voltage V_{CRG} which is equal to the crest value of the power supply voltage.

The reference voltage may be set to a value which is slightly higher than the charging voltage V_{CRG}. This is to more reliably prevent a situation where the power supply regenerative operation is started accidentally or stop-start of the power supply regenerative operation is repeated frequently as a result of the fact that a DC voltage value (normally maintained at a level of the charging voltage V_{CRG}) in the DC link capacitor 14 has exceeded the reference voltage (e.g., the charging voltage V_{CRG}) instantaneously due to a noise or the like despite the absence of the regeneration from the motors 40 to the DC link capacitor 14.

The computation part 161 calculates voltage difference V_{DIFF} between a present DC voltage value V_{CRT} in the DC link capacitor 14 detected by the DC voltage detector 15 and the reference voltage stored in the reference voltage storage part 160. Then, the computation part 161 outputs the calculated voltage difference V_{DIFF} to the control gain multiplication part 162.

The control gain multiplication part 162 calculates an AC command value A_{TMP1} from an AC value A_{DIFF1} corresponding to the voltage difference V_{DIFF}. Then, the control gain multiplication part 162 multiplies the AC command value A_{TMP1} by a predetermined control gain depending on sign (positive or negative) or magnitude of the calculated AC command value A_{TMP1}. Then, the control gain multiplication part 162 outputs to the limiter part 163 the AC command value A_{TMP1} multiplied by the control gain.

Preferably, the AC value A_{DIFF1} is set to increase with increase in the voltage difference V_{DIFF}. For example, the AC value A_{DIFF1} bears a proportionate relationship to the voltage difference V_{DIFF}.

The limiter part 163 is an element to maintain the AC command value A_{TMP1} within a predetermined range. For example, the limiter part 163 compares the AC command value A_{TMP1} and a minimum allowable value A_{MIN}, and compares the AC command value A_{TMP1} and a maximum allowable value A_{MAX}. Then, the limiter part 163 outputs the AC command value A_{TMP1} as the target AC command value A_{TGT} to the computation part 164 while limiting the AC command value A_{TMP1} between the minimum allowable value A_{MIN} and the maximum allowable value A_{MAX}.

Also, the minimum allowable value A_{MIN} is set to, for example, a value of zero. In the present embodiment, an alternating current having a negative value represents an alternating current flowing (in a power-running direction) from the AC power supply 20 to the power supply regenerative converter 10, while an alternating current having a positive value represents an alternating current flowing (in a regenerative direction) from the power supply regenerative converter 10 to the AC power supply 20. In this case, by setting the minimum allowable value A_{MIN} to a value of zero, the AC control part 16 can restrict a direction of an alternating current only in the regenerative direction, and can prevent the power-running operation.

Also, the maximum allowable value A_{MAX} is set to, for example, an AC value which is less than or equal to a maximum allowable alternating current in the power supply regenerative converter 10.

Also, both the minimum allowable value A_{MIN} and the maximum allowable value A_{MAX} are preliminarily stored in a non-volatile storage medium such as a NVRAM, a ROM, or the like. They can be either modifiable or non-modifiable.

The computation part 164 is an element to calculate the difference ΔA between a present AC value A_{CRT} detected by the AC detector 13 and the target AC command value A_{TGT} from the limiter part 163. The difference ΔA may be either an incremental or a decremental. For example, the computation part 164 outputs to the control signal output part 165 a value ΔA obtained by subtracting the present AC value A_{CRT} from the target AC command value A_{TGT}.

The control signal output part 165 outputs to the electric power conversion part 11 a control signal corresponding to the value ΔA received from the computation part 164 by means of a PI control so that an alternating current represented by the target AC command value A_{TGT} can actually flow between the electric power conversion part 11 and the AC power supply 20 (i.e., so that the value ΔA becomes zero).

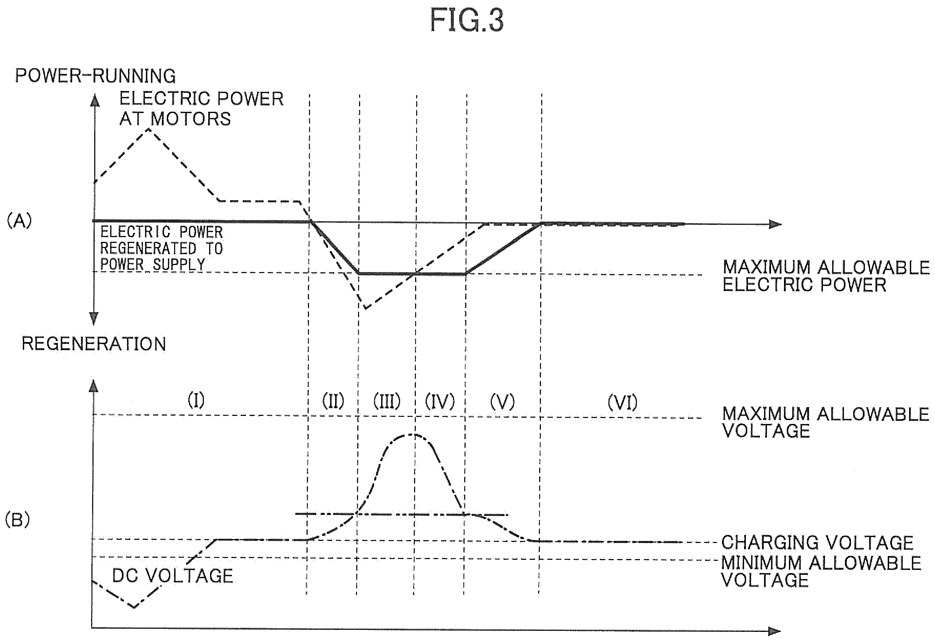

Next, referring to FIG. 3, time variances of the electric power at the motors, the electric power regenerated to a power supply, and a DC voltage, in the power supply regenerative converter 10 will be explained.

FIG. 3(A) is a diagram showing time variances of the electric power at the motors and the electric power regenerated to a power supply. The electric power at the motors corresponds to the total electric power transferred between the electric power conversion part 11 and each of the motors 40. The electric power regenerated to a power supply is the electric power returned from the power supply regenerative converter 10 to the AC power supply 20. To simplify an explanation, the electric power charged into the DC link capacitor 14 is omitted from the electric power regenerated to a power supply. An area above a time axis (an abscissa axis) represents a power-running state, while an area below the time axis (the abscissa axis) represents a regeneration state. Hereinafter, the area above the time axis is referred to as a "power-running area", and the area below the time axis is referred to as a "regeneration area".

Also, FIG. 3(B) shows the time variance of a DC voltage of the DC link capacitor 14. Its time axis (its abscissa axis) corresponds to that of FIG. 3(A).

The time variances of the electric power at the motors, the electric power regenerated to a power supply, and DC voltage are divided into plural phases by plural dashed lines parallel to a vertical axis. A phase (I) corresponds to a state where the power supply regenerative converter 10 is in a resting state. A phase (II) corresponds to a state after the power supply regenerative converter 10 has started the power supply regenerative operation.

A phase (III) corresponds to a state of the power supply regenerative operation after the electric power (an alternating current) regenerated to a power supply which is a part of the electric power (an alternating current) regenerated from the motors 40 has exceeded a maximum allowable electric power (a maximum allowable alternating current) which can be transferred from the power supply regenerative converter 10 to the AC power supply 20. A phase (IV) corresponds to a state of the power supply regenerative operation after the electric power (an alternating current) regenerated from the motors 40 has fallen below the maximum allowable electric power (the maximum allowable alternating current) again.

A phase (V) corresponds to a state of the power supply regenerative operation after the target AC command value A_{TGT} corresponding to the voltage difference V_{DIFF} has fallen below the maximum allowable value A_{MAX} (i.e., after the electric power regenerated to a power supply has fallen below the maximum allowable electric power). A phase (VI) corresponds to a resting state (a state where both the power-running operation and the power supply regenerative operation are not being performed) after the electric power regenerated to a power supply has become zero.

In the phase (I), the power supply regenerative converter 10 supplies electric power from the AC power supply 20 to the DC link capacitor 14 if the present DC voltage value V_{CRT} detected by the DC voltage detector 15 has fallen below the charging voltage V_{CRG} so that the power supply regenerative converter 10 can raise the DC voltage value to a value of the charging voltage V_{CRG}.

As a result, a DC voltage indicated by a dashed-dotted line in FIG. 3(B) is raised to a level of the charging voltage V_{CRG} if it has fallen below the charging voltage V_{CRG}.

Subsequently, in the phase (II), the limiter part 163 in the AC control part 16 in the power supply regenerative converter 10 outputs to the computation part 164 the AC command value A_{TMP1}, which is a positive value and less than the maximum allowable value A_{MAX}, as the target AC command value A_{TGT}, if the electric power is regenerated from the motors 40 and the present DC voltage value V_{CRT} exceeds the charging value V_{CRG}. Then, the control signal output part 165 outputs to the electric power conversion part 11 a control signal corresponding to the difference ΔA between the target AC command value A_{TGT} and the present AC value A_{CRT} detected by the AC detector 13. Thus, the power supply regenerative converter 10 performs a power supply regenerative operation depending on the voltage difference V_{DIFF} between the present DC voltage value V_{CRT} and the charging voltage VCRG (e.g., a power supply regenerative operation to gradually increase the voltage difference V_{DIFF} while suppressing a surge in the voltage difference V_{DIFF}).

Also, in the power supply regenerative converter 10, if a present DC voltage value V_{CRT} is less than the charging voltage V_{CRG}, even if electric power is regenerated from the motors 40, the limiter part 163 of the AC control part 16 replaces the AC command value A_{TMP1}, which is a negative value, by the minimum allowable value A_{MIN} (a value of zero), and outputs the replaced value as the target AC command value A_{TGT} to the computation part 164. Otherwise the AC command value A_{TMP1} will cause the power-running operation to start. Then, the control signal output part 165 outputs to the electric power conversion part 11 a control signal corresponding to the difference ΔA between the target AC command value A_{TGT} and a present AC value A_{CRT} detected by the AC detector 13. Thus, the power supply regenerative converter 10 stores in the DC link capacitor 14 electric power from the motors 40 while preventing the power supply regenerative operation from being started.

As a result, if the electric power at the motors indicated by a dashed line in FIG. 3(A) has reached the regeneration area, the electric power regenerated to a power supply indicated by a solid line in FIG. 3(A) increases (moves downward in FIG. 3(A)) in the regeneration area along with the electric power at the motors indicated by the dashed line in FIG. 3(A). Thus, a part of the electric power regenerated from the motors 40 to the DC link capacitor 14 is directly regenerated to the AC power supply 20. Hence, a DC voltage indicated by a dashed-dotted line in FIG. 3(B) increases at a rate corresponding to voltage difference between the electric power at the motors and the electric power regenerated to a power supply.

Subsequently, in the phase (III), if the target AC command value A_{TGT} has reached the maximum allowable value A_{MAX}, the limiter part 163 in the power supply regenerative converter 10 sets a target AC command value A_{TGT} to the maximum allowable value A_{MAX}, and limits the alternating current flowing from the power supply regenerative converter 10 to the AC power supply 20. In this way, the power supply regenerative converter 10 stores in the DC link capacitor 14 an electric power P3 which is a part of an electric power P1 regenerated from the motors 40 to the DC link capacitor 14. The electric power P3 is not returned to the AC power supply 20, and corresponds to a difference between the electric power P1 regenerated from the motors 40 to the DC link capacitor 14 and an electric power P2 (P2<P1) regenerated from the power supply regenerative converter 10 to the AC power supply 20 (P3=P1-P2).

As a result, a DC voltage indicated by a dashed-dotted line in FIG. 3(B) increases at a rate corresponding to voltage difference between the electric power regenerated to a power supply indicated by a solid line in FIG. 3(A) and the electric power at the motors indicated by a dashed line in FIG. 3(A). The electric power regenerated to a power supply remains constant at a level of the maximum allowable electric power corresponding to the maximum allowable value A_{MAX}. The dashed-two dotted line in FIG. 3(B) indicates a level of the voltage difference V_{DIFF} when the target AC command value A_{TGT} from the limiter part 163 reaches the maximum allowable value A_{MAX}.

Subsequently, in the phase (IV), even if the electric power P1 has fallen below the maximum allowable electric power, i.e., even if the power supply regenerative converter 10 has returned to a state where it can regenerate all of the electric power P1 to the AC power supply 20 while maintaining an alternating current flowing from the power supply regenerative converter 10 to the AC power supply 20 at a value less than or equal to the maximum allowable value A_{MAX}, the limiter part 163 of the power supply regenerative converter 10 outputs a target AC command value A_{TGT} corresponding to the voltage difference V_{DIFF}. In this case, the target AC command value A_{TGT} is greater than or equal to the maximum allowable value A_{MAX}. Thus, the target AC command value A_{TGT} is limited to the maximum allowable value A_{MAX}. Then, the control signal output part 165 outputs to the electric power conversion part 11 a control signal corresponding to difference ΔA between the target AC command value A_{TGT} and a present AC value A_{CRT} detected by the AC detector 13.

As a result, the electric power at the motors indicated by a dashed line in FIG. 3(A) decreases (moves upward in FIG. 3(A)). While, the electric power regenerated to a power supply indicated by a solid line in FIG. 3(A) remains at a level of the maximum allowable electric power until a DC voltage value indicated by a dashed-dotted line in FIG. 3(B) decreases to a level indicated by a dashed-two dotted line in FIG. 3(B). Thus, the electric power exceeding the electric power P1 regenerated from the motors 40 to the DC link capacitor 14 is regenerated to the AC power supply 20. Hence, the DC voltage indicated by the dashed-dotted line in FIG. 3(B) decreases relatively drastically at a rate corresponding to the voltage difference between the electric power regenerated to a power supply and the electric power at the motors.

Subsequently, in the phase (V), after a target AC command value A_{TGT} corresponding to the voltage difference V_{DIFF} has fallen below the maximum allowable value A_{MAX}, i.e., after the electric power regenerated to a power supply has fallen below the maximum allowable electric power, the limiter part 163 in the power supply regenerative converter 10 outputs the target AC command value A_{TGT} corresponding to the voltage difference V_{DIFF} so that the power supply regenerative operation corresponding to the voltage difference V_{DIFF} can be performed- The power supply regenerative operation corresponding to the voltage difference V_{DIFF} is, for example, a power supply regenerative operation to gradually decrease the voltage difference V_{DIFF}. In this case, the target AC command value A_{TGT} is less than the maximum allowable value A_{MAX}. Thus, the target AC command value A_{TGT} is not limited to the maximum allowable value A_{MAX}. Then, the control signal output part 165 outputs to the electric power conversion part 11 a control signal corresponding to difference ΔA between the target AC command value A_{TGT} and a present AC value A_{CRT} detected by the AC detector 13.

As a result, the electric power regenerated to a power supply indicated by a solid line in FIG. 3(A) starts decreasing when a DC voltage value indicated by the dashed-dotted line in FIG. 3(B) has reached to a level indicated by the dashed-two dotted line in FIG. 3(B), and gradually decreases from a level at the maximum allowable electric power to a level at a value of zero (i.e., moves upward in FIG. 3(A)). Also, DC voltage indicated by the dashed-dotted line in FIG. 3(B) gradually decreases to a level of the charging voltage V_{CRG}.

Subsequently, in the phase (IV), the limiter part 163 in the power supply regenerative converter 10 outputs the target AC command value A_{TGT} as in the preceding phases. In this case, the voltage difference V_{DIFF} is equal to a value of zero. Thus, the target AC command value A_{TGT} is equal to a value of zero. Then, the control signal output part 165 outputs to the electric power conversion part 11 a control signal corresponding to difference ΔA between the target AC command value A_{TGT} (a value of zero) and a present AC value A_{CRT} detected by the AC detector 13. That is, the power supply regenerative converter 10 stops the power supply regenerative operation.

As a result, both the electric power regenerated to a power supply indicated by the solid line in FIG. 3(A) and the electric power at the motors indicated by the dashed line in FIG. 3(A) remain at a level of a value of zero. Also, the DC voltage indicated by the dashed-dotted line in FIG. 3(B) remains at a level of the charging voltage V_{CRG}.

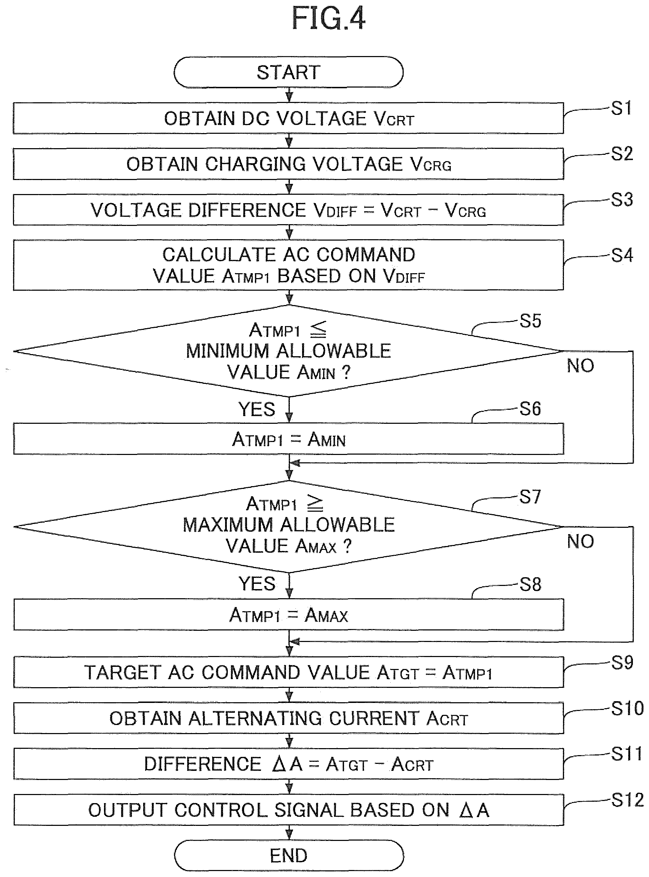

Next, referring to FIG. 4, a process where the power supply regenerative converter 10 controls an operation of the electric power conversion part 11 (hereinafter referred to as an "electric power conversion control process") will be explained. FIG. 4 is a flowchart showing a flow of the electric power conversion control process. The power supply regenerative converter 10 executes this process repeatedly at a predetermined frequency.

Firstly, the AC control part 16 obtains a present DC voltage value V_{CRT} in the DC link capacitor 14 detected by the DC voltage detector 15 (step S1). Then, the AC control part 16 stores the obtained value in a RAM.

Subsequently, the AC control part 16 obtains a value of a reference voltage (i.e., a charging voltage V_{CRG}) stored in the reference voltage storage part 160 (step S2). Then, the computation part 161 calculates a voltage difference V_{DIFF} between the present AC voltage value V_{CRT} and a value of the charging voltage V_{CRG} (step S3) .

Specifically, the computation part 161 in the AC control part 16 subtracts the value of the charging voltage V_{CRG} from the present DC voltage value V_{CRT}, and outputs the subtraction result as the voltage difference V_{DIFF} to the control gain multiplication part 162.

Subsequently, the control gain multiplication part 162 in the AC control part 16 calculates an AC command value A_{TMP1} from an AC value A_{DIFF1} corresponding to the voltage difference V_{DIFF}. Then, the control gain multiplication part 162 multiplies the AC command value A_{TMP1} by a predetermined control gain depending on sign (positive or negative) or the magnitude of the calculated AC command value A_{TMP1}. Then, the control gain multiplication part 162 outputs to the limiter part 163 the AC command value A_{TMP1} multiplied by the control gain (step S4).

Subsequently, the limiter part 163 in the AC control part 16 determines whether the AC command value A_{TMP1} is less than or equal to a minimum allowable value A_{MIN} or not (step S5). If it is less than or equal to the minimum allowable value A_{MIN} (YES in step S5), the limiter part 163 replaces the AC command value A_{TMP1} by the minimum allowable value A_{MIN} (step S6). If it is greater than the minimum allowable value A_{MIN} (NO in step S5), the limiter part 163 adopts the AC command value A_{TMP1} without any change.

In addition, the limiter part 163 in the AC control part 16 determines whether the AC command value A_{TMP1} is greater than or equal to a maximum allowable value A_{MAX} (step S7). If it is greater than or equal to the maximum allowable value A_{MAX} (YES in step S7), the limiter part 163 replaces the AC command value A_{TMP1} by the maximum allowable value A_{MAX} (step S8). If it is less than the maximum allowable value A_{MAX} (NO in step S7), the limiter part 163 adopts the AC command value A_{TMP1} without any change. Processes in steps S5 and S6 and processes in steps S7 and S8 are in no particular order. They may be executed simultaneously.

Subsequently, the limiter part 163 in the AC control part 16 sets the AC command value A_{TMP1} as a target AC command value A_{TGT} (step S9), and outputs the target AC command value A_{TGT} to the computation part 164.

Subsequently, the computation part 164 in the AC control part 16 obtains a present AC value A_{CRT} between the electric power conversion part 11 and the AC power supply 20 which is detected by the AC detector 13 (step S10), and stores the obtained value A_{CRT} in the RAM.

Subsequently, the computation part 164 in the AC control part 16 calculates a difference ΔA by subtracting the present AC value A_{CRT} from the target AC command value A_{TGT} (step S11). Then, the control signal output part 165 produces a control signal corresponding to the difference ΔA, and outputs the produced control signal to the electric power conversion part 11 (step S12).

When the electric power conversion part 11 receives the control signal, the electric power conversion part 11 activates a switching element and changes duty cycle of a pulse width in the PWM control so that a value of an alternating current flowing from the power supply regenerative converter 10 to the AC power supply 20 can reach the target AC command value A_{TGT}.

According to a flow like the one mentioned above, the power supply regenerative converter 10 is able to control an operation of the electric power conversion part 11.

By means of the above configuration, the power supply regenerative converter 10 obtains an increment of the electric power in the DC link capacitor 14 increased by electric power regeneration from the motors 40 to the DC link capacitor 14, as a voltage difference V_{DIFF} between a present DC voltage value V_{CRT} in the DC link capacitor 14 and the charging voltage V_{CRG} stored in the reference voltage storage part 160. Then, the power supply regenerative converter 10 regenerates a part of the increment of the electric power to the AC power supply 20 while increasing or decreasing the electric power (an alternating current) regenerated to a power supply at a rate corresponding to the voltage difference V_{DIFF}. Thus, the power supply regenerative converter 10 can prevent the electric power regenerated to a power supply from drastically increasing immediately after the power supply regenerative operation has started.

Also, the power supply regenerative converter 10 controls the electric power conversion part 11 to curb an increase in the voltage difference. Thus, the power supply regenerative converter 10 can start the power supply regenerative operation at a stage where electric power regenerated from the inverter parts 30 to the DC link capacitor 14 is low.

Also, the AC control part 16 in the power supply regenerative converter 10 can restrict a direction of an alternating current only in the regenerative direction. Thus, the power supply regenerative converter 10 can prevent the power-running operation (i.e., electric power distribution from the AC power supply 20 to the power supply regenerative converter 10) from being performed during the power supply regenerative operation.

Also, the power supply regenerative converter 10 can prevent a DC voltage of the DC link capacitor 14 from falling below a reference voltage immediately after the DC voltage has exceeded the reference voltage even if the reference voltage is set to a relatively low value (e.g., even if the reference voltage is set to a value of the charging voltage or a value which is slightly higher than the charging voltage). Thus, the power supply regenerative converter 10 does not have to set the reference voltage to a higher value in order to prevent chattering, and can start the power supply regenerative operation earlier.

Also, the power supply regenerative converter 10 can start the power supply regenerative operation earlier. As a result, the power supply regenerative converter 10 can extend operating time of the power supply regenerative operation, and can decrease the electric power stored in the DC link capacitor 14 which is a part of the electric power generated by the motors 40 (e.g., a peak value of the DC voltage). Thus, the power supply regenerative converter 10 can lower a required capacitance of the DC link capacitor 14.

Also, the power supply regenerative converter 10 controls the electric power conversion part 11 while monitoring a DC voltage of the DC link capacitor 14 and an alternating current flowing between the electric power conversion part 11 and the AC power supply 20. Thus, the power supply regenerative converter 10 can control the electric power conversion part 11 without knowing operating states of each of plural motors 40 in detail.

Also, the power supply regenerative converter 10 performs the power supply regenerative operation while curbing an increase in the voltage difference V_{DIFF}. Thus, change in the electric power (an alternating current) regenerated to a power supply becomes continuous (i.e., smooth). As a result, the power supply regenerative converter 10 can reduce a noise emanating from a power supply side.

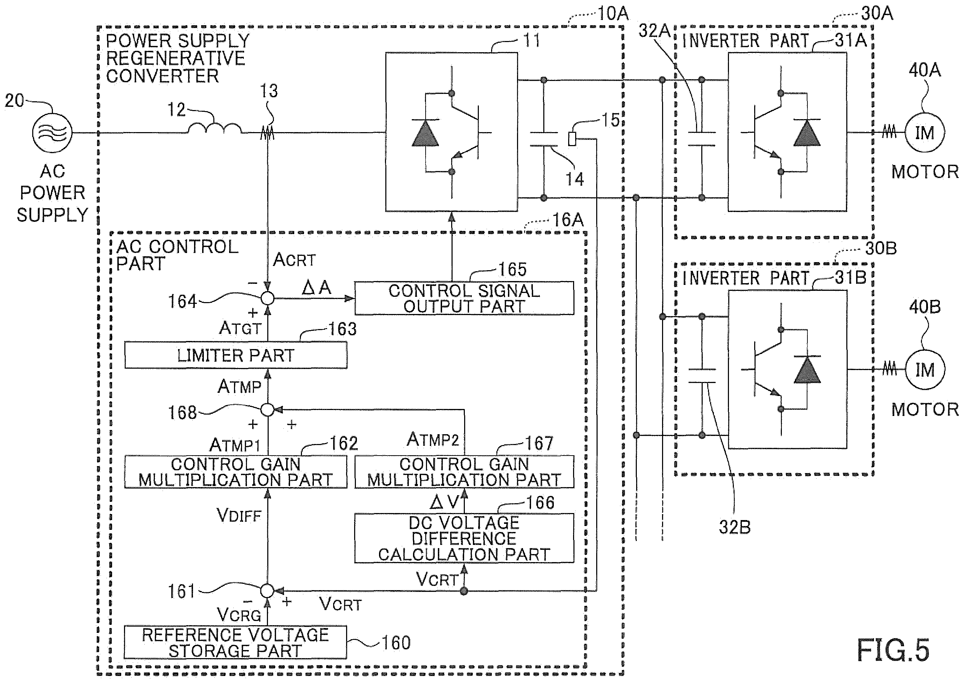

Next, referring to FIGS. 5-7, another configuration example of a power supply regenerative converter mounted on an injection molding machine according to an embodiment of the present invention will be explained.

FIG. 5 is a functional block diagram showing a configuration example of a power supply regenerative converter 10A mounted on an injection molding machine according to an embodiment of the present invention. The power supply regenerative converter 10A is different to the power supply regenerative converter 10 in FIG. 2 in that its AC control part 16A has a DC voltage difference calculation part 166, a control gain multiplication part 167, and a computation part 168. However, for the rest, the power supply regenerative converter 10A is identical to the power supply regenerative converter 10. Thus, differences will be explained in detail while leaving out explanations of common points.

The DC voltage difference calculation part 166 calculates a difference ΔV between a DC voltage value V_{PRV} detected by the DC voltage detector 15 at a previous control cycle and a DC voltage value V_{CRT} detected at a present control cycle. The DC voltage value V_{PRV} has been stored, for example, in the RAM. Also, the DC voltage value V_{PRV} may be a value detected several control cycles ago. Also, the difference ΔV may be either an incremental or a decremental. Then, the DC voltage difference calculation part 166 outputs the calculated difference ΔV to the control gain multiplication part 167.

The control gain multiplication part 167 calculates an AC command value A_{TMP2} from an AC value A_{DIFF2} corresponding to the difference ΔV, and outputs the calculated AC command value A_{TMP2} to the computation part 168.

The computation part 168 calculates an AC command value A_{TMP} by adding the AC command value A_{TMP1} from the control gain multiplication part 162 and the AC command value A_{TMP2} from the control gain multiplication part 167, and outputs the calculated AC command value A_{TMP} to the limiter part 163.

By means of this configuration, the power supply regenerative converter 10A can decide a target AC command value A_{TGT} in consideration of the difference ΔV (i.e., an instantaneous difference) between the present DC voltage value V_{CRT} and the DC voltage value V_{PRV} detected at the previous control cycle, as well as the voltage difference V_{DIFF} (i.e., a cumulative difference) between the present DC voltage value V_{CRT} and the charging voltage V_{CRG}. For example, the power supply regenerative converter 10A acquires ability to increase the electric power regenerated to a power supply more rapidly in response to an increase in the electric power at the motors in the regeneration area. Thus, the power supply regenerative converter 10A acquires ability to regenerate all of electric power, which is regenerated from the motors 40 to the DC link capacitor 14, directly to the AC power supply 20. In this way, the power supply regenerative converter 10A can further reduce the voltage difference V_{DIFF}, i.e., an increase in a DC voltage of the DC link capacitor 14.

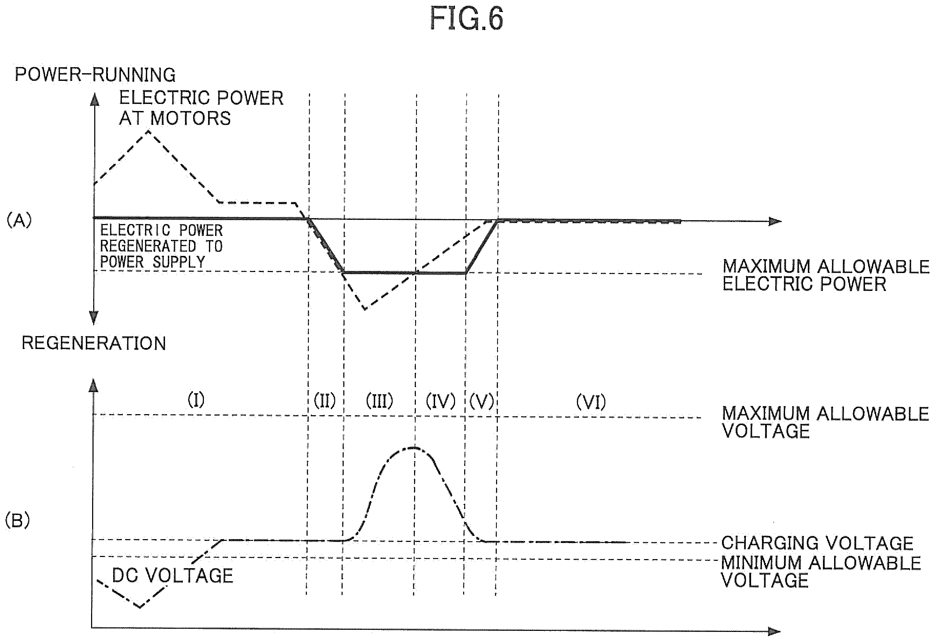

FIG. 6 is a diagram showing time variances of the electric power at the motors, the electric power regenerated to a power supply, and DC voltage, in the power supply regenerative converter 10A. It is different to FIG. 3 in terms of transitions in the phases (II) and (V). However, for transitions in the other phases, it is identical to that of FIG. 3. Thus, differences will be explained in detail while leaving out explanations of common points.

In the phase (II), if the electric power is regenerated from the motors 40 and if a present DC voltage value V_{CRT} exceeds the charging voltage V_{CRG}, the limiter part 163 in the AC control part 16A in the power supply regenerative converter 10A outputs to the computation part 164 a total value A_{TMP} of the AC command value A_{TMP1} and the AC command value A_{TMP2}, as the target AC command value A_{TGT}. The total value A_{TMP} is a positive value less than the maximum allowable value A_{MAX}. Then, the control signal output part 165 outputs to the electric power conversion part 11 a control signal corresponding to the difference ΔA between the target AC command value A_{TGT} and the present AC value A_{CRT} detected by the AC detector 13. In this way, the power supply regenerative converter 10A allows the power supply regenerative operation to be performed depending on both the voltage difference V_{DIFF} between the present DC voltage value V_{CRT} and the charging voltage V_{CRG} as well as the difference ΔV between the present DC voltage value V_{CRT} and the DC voltage value V_{PRV} detected at the previous control cycle. The power supply regenerative operation is, for example, a power supply regenerative operation to cancel out both the voltage difference V_{DIFF} and the difference ΔV.

As a result, if the electric power at the motors indicated by a dashed line in FIG. 6(A) has reached the regeneration area, the electric power regenerated to a power supply indicated by a solid line in FIG. 6(A) increases (moves downward in FIG. 6(A)) in the regeneration area so that the electric power regenerated to a power supply overlaps with the electric power at the motors indicated by the dashed line. All the electric power regenerated from the motors 40 to the DC link capacitor 14 are regenerated directly to the AC power supply 20. Thus, DC voltage indicated by a dashed-dotted line in FIG. 6(B) remains at a level of the charging voltage V_{CRG}.

Also, the DC voltage indicated by the dashed-dotted line in FIG. 6(B) does not increase in the phase (II). Thus, its peak value, which is a DC voltage value at the start of the phase (IV), is kept low, compared with the DC voltage indicated by the dashed-dotted line in FIG. 3(B). As a result, the power supply regenerative converter 10A can lower a required capacitance of the DC link capacitor 14, compared with the power supply regenerative converter 10.

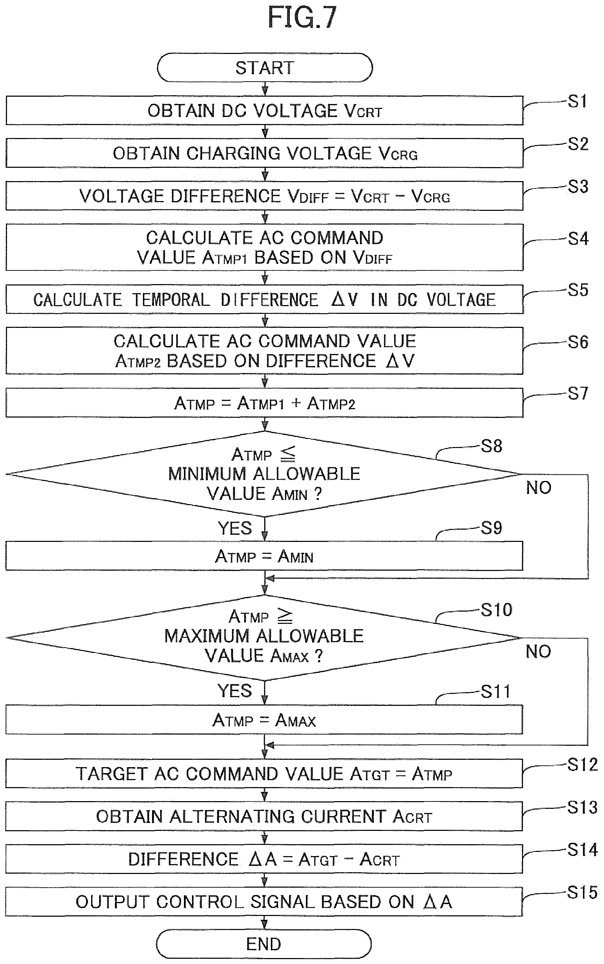

FIG. 7 is a flowchart showing a flow of an electric power conversion control process in the power supply regenerative converter 10A. It is different to the flowchart in FIG. 4 in that steps S5-S7 are newly added. However, for the other steps, it is identical to the flowchart in FIG. 4. Thus, differences will be explained in detail while leaving out explanations of common points.

Steps S1-S4 are identical to steps S1-S4 in FIG. 4.

In step S5, the DC voltage difference calculation part 166 in the AC control part 16A calculates a difference ΔV by subtracting from a present DC voltage value V_{CRT} a DC voltage value V_{PRV} detected at a previous control cycle and stored in a RAM. If there is no value detected at the previous control cycle, a value of the charging voltage V_{CRG} is used as the DC voltage value V_{PRV}. The DC voltage value V_{PRV} may be a value detected several control cycles ago.

Subsequently, in step S6, the control gain multiplication part 167 in the AC control part 16A calculates an AC command value A_{TMP2} from an AC value A_{DIFF2} corresponding to the difference ΔV.

Subsequently, the computation part 168 in the AC control part 16A calculates an AC command value A_{TMP} by adding the AC command value A_{TMP1} from the control gain multiplication part 162 and the AC command value A_{TMP2} from the control gain multiplication part 167. Then, the computation part 168 outputs the calculated AC command value A_{TMP} to the limiter part 163. Following steps S8-S15 are identical to steps S5-S12 in FIG. 4. Also, the processes in steps S2-S4 and the processes in steps S5 and S6 are in no particular order. They may be executed simultaneously.

By means of the above configuration, in addition to the effect brought about by the power supply regenerative converter 10, the power supply regenerative converter 10A brings about an effect to further reduce a peak voltage of a DC voltage of the DC link capacitor 14, and to further reduce a required capacitance of the DC link capacitor 14.

Also, the power supply regenerative converter 10A controls the electric power conversion part 11 to deal with an instantaneous change in DC voltage of the DC link capacitor 14. Thus, the power supply regenerative converter 10A can perform the power supply regenerative operation more efficiently.

Also, the power supply regenerative converter 10A brings about an effect to return DC voltage of the DC link capacitor 14 to the charging voltage VCRG earlier than the power supply regenerative converter 10 does, after completion of regeneration of electric power at the motors.

A preferable embodiment of the present invention has been described in detail as above. However, the present invention should not be limited to the above described embodiment. A variety of modifications and substitutions to the above described embodiment can be made without departing from the scope of the present claims.

For example, in the above embodiment, the power supply regenerative converters 10, 10A multiply an AC command value by a control gain, and then, output the AC command value to the limiter part 163. However, they may output the AC command value to the limiter part 163 without multiplying the control gain.

Also, the power supply regenerative converters 10, 10A may set contents of the power supply regenerative operation based on a cycle pattern of an injection molding machine. Specifically, for example, the power supply regenerative converter 10 may set the maximum allowable electric power, the reference voltage, the charging voltage VCRG, the minimum allowable value AMIN, the maximum allowable value AMAX, and the like, during the power supply regenerative operation, for each of a variety of processes in the injection molding machine such as the plasticizing/dosing process, the nozzle touch process, the injection process, the pressure-keeping process, the mold opening process, the mold closing process, the product ejecting process, and the like.

### EXPLANATION OF REFERENCES

- 1: injection molding machine
- 2: ball screw
- 3: nut
- 4: pressure plate
- 5,6: guide bar
- 7: bearing
- 8: load cell
- 9: injection axis
- 10, 10A: power supply regenerative converter
- 11: electric power conversion part
- 12: AC reactor
- 13: AC detector
- 14: DC link capacitor
- 15: DC voltage detector
- 16, 16A: AC control part
- 20: AC power supply
- 30,30A-30D: inverter parts
- 31,31A, 31B: electric power conversion parts
- 32,32A,32B: capacitors
- 40,40A-40D: motors
- 41,41A-41D: encoders
- 50: screw
- 51: heating cylinder
- 51-1: nozzle
- 52: hopper
- 53: connecting member
- 55: load cell amplifier
- 56: controller
- 57: position detector
- 58: amplifier
- 160: reference voltage storage part
- 161: computation part
- 162: control gain multiplication part
- 163: limiter part
- 164: computation part
- 165: control signal output part
- 166: DC voltage difference calculation part
- 167: control gain multiplication part
- 168: computation part

## Claims

1. A power supply regenerative converter (10, 10A) connected between an alternating current power supply (20) and an inverter (30A), comprising:
an electric power conversion part (11) configured to bidirectionally convert between an alternating current electric power and a direct current electric power;
a direct current voltage detector (15) configured to detect a direct current voltage of a capacitor (14) between the inverter (30A) and the electric power conversion part (11) ;
an alternating current control part (16, 16A) configured to output a control signal, which is produced based on a voltage difference (V_{DIFF}) between a direct current voltage (V_{CRT}) detected by the direct current voltage detector (15) and a predetermined voltage (V_{CRG}), to the electric power conversion part (11), and configured to control an alternating current flowing between the alternating current power supply (20) and the electric power conversion part (11), **characterized in that** in a case where an electric power regenerated to the capacitor (14) is greater than or equal to an electric power corresponding to a maximum allowable value (A_{MAX}) of an alternating current flowing to the alternating current power supply (2), the power supply regenerative converter (10, 10A) sets an alternating current flowing from the electric power conversion part (11) to the alternating current power supply (20) to the maximum allowable value (A_{MAX}), and stores an electric power corresponding to a difference between an electric power regenerated to the capacitor (14) and an electric power regenerated from the electric power conversion part (11) to the alternating current power supply (20) in the capacitor (14).

2. An injection molding machine (1) including the power supply regenerative converter (10, 10A) as claimed in claim 1.

3. The injection molding machine (1) as claimed in claim 2, wherein the alternating current control part (16, 16A) outputs to the electric power conversion part (11) a control signal to cancel out the voltage difference.

4. The injection molding machine (1) as claimed in claim 2, wherein the alternating current control part (16A) outputs a control signal, which is based on a voltage difference (V_{DIFF}) between a direct current voltage (V_{CRT}) detected by the direct current voltage detector (15) and a predetermined voltage (V_{CRG}) as well as based on a time variance of the direct current voltage, to the electric power conversion part (11), and controls an alternating current flowing between the alternating current power supply (20) and the electric power conversion part (11).

5. The injection molding machine (1) as claimed in claim 2, wherein the control signal is output so that an alternating current is prevented from flowing from the alternating current power supply (20) to the electric power conversion part (11), if the direct current voltage is greater than the predetermined voltage (V_{CRG}).

## Patentansprüche

1. Regenerativer Wandler zur Stromversorgung (10, 10A), der zwischen einer Wechselstromversorgung (20) und einem Wechselrichter (30A) geschaltet ist, umfassend:
ein elektrisches Leistungswandlungsteil (11), das konfiguriert ist, um bidirektional zwischen einer elektrischen Wechselstromleistung und einer elektrischen Gleichstromleistung zu wandeln;
einen Gleichstrom-Spannungsdetektor (15), der konfiguriert ist, um eine Gleichspannung eines Kondensators (14) zwischen dem Wechselrichter (30A) und dem elektrischen Leistungswandlungsteil (11) zu erfassen;
ein Wechselstrom-Steuerteil (16, 16A), das konfiguriert ist, um ein Steuersignal, das basierend auf einer Spannungsdifferenz (V_{DIFF}) zwischen einer vom Gleichstromspannungsdetektor (15) erfassten Gleichspannung (V_{CRT}) und einer vorbestimmten Spannung (V_{CRG}) erzeugt wird, an das elektrische Leistungsumwandlungsteil (11) auszugeben, und das konfiguriert ist, um einen zwischen der Wechselstromquelle (20) und dem elektrischen Leistungsumwandlungsteil (11) fließenden Wechselstrom zu steuern,
**dadurch gekennzeichnet, dass**
in einem Fall, in dem eine dem Kondensator (14) rückgespeiste elektrische Leistung größer oder gleich einer elektrischen Leistung ist, die einem maximal zulässigen Wert (A_{MAX}) eines Wechselstroms entspricht, der zu der Wechselstromquelle (2) fließt, der regenerative Wandler zur Stromversorgung (10, 10A) einen Wechselstrom, der vom elektrischen Leistungswandlungsteil (11) zur Wechselstromversorgung (20) fließt, auf den maximal zulässigen Wert (A_{MAX}) einstellt und eine elektrische Leistung speichert, die einer Differenz zwischen einer zum Kondensator (14) rückgespeisten elektrischen Leistung und einer vom elektrischen Leistungswandlungsteil (11) zur Wechselstromversorgung (20) im Kondensator (14) rückgespeisten elektrischen Leistung entspricht.

2. Spritzgießmaschine (1), beinhaltend den regenerativen Wandler zur Stromversorgung (10, 10A) nach Anspruch 1.

3. Spritzgießmaschine (1) nach Anspruch 2, wobei das Wechselstrom-Steuerteil (16, 16A) an den elektrischen Leistungswandlungsteil (11) ein Steuersignal ausgibt, um die Spannungsdifferenz aufzuheben.

4. Spritzgießmaschine (1) nach Anspruch 2, wobei das Wechselstromsteuerteil (16A) ein Steuersignal, das auf einer Spannungsdifferenz (V_{DIFF}) zwischen einer vom Gleichstromsensor (15) erfassten Gleichspannung (V_{CRT}) und einer vorgegebenen Spannung (V_{CRG}) sowie auf einer zeitlichen Varianz der Gleichspannung basiert ,an den elektrischen Leistungswandlungsteil (11) ausgibt, und einen zwischen der Wechselstromquelle (20) und dem elektrischen Leistungswandlungsteil (11) fließenden Wechselstrom steuert.

5. Spritzgießmaschine (1) nach Anspruch 2, wobei das Steuersignal so ausgegeben wird, dass das Fließen eines Wechselstroms von der Wechselstromversorgung (20) zum elektrischen Leistungswandlungsteil (11) verhindert wird, wenn die Gleichspannung größer ist als die vorgegebene Spannung (V_{CRG}).

## Revendications

1. Convertisseur à récupération de source d'alimentation (10, 10A) connecté entre une source d'alimentation en courant alternatif (20) et un onduleur (30A), comprenant :
une unité de conversion de puissance électrique (11) configurée pour une conversion manière bidirectionnelle entre une puissance électrique de courant alternatif et une puissance électrique de courant continu ;
une unité (15) de détection de tension de courant continu configuré pour détecter une tension de courant continu d'un condensateur (14) entre l'onduleur (30A) et l'unité de conversion de puissance électrique (11) ;
une unité de régulation de courant alternatif (16, 16A) configurée pour délivrer un signal de régulation, qui est produit sur la base d'une différence de tension (V_{DIFF}) entre une tension de courant continu (V_{CRT}) détectée par l'unité (15) de détection de tension de courant continu et une tension prédéterminée (V_{CRG}), à l'unité de conversion de puissance électrique (11), et configurée pour réguler un courant alternatif circulant entre la source (20) d'alimentation en courant alternatif et l'unité de conversion de puissance électrique (11),
**caractérisé en ce que**
dans un cas où une puissance électrique régénérée vers le condensateur (14) est supérieure ou égale à une puissance électrique correspondant à une valeur maximale admissible (A_{MAX}) d'un courant alternatif circulant dans la source d'alimentation en courant alternatif (2), le convertisseur à récupération de source d'alimentation (10, 10A) établit un courant alternatif circulant de l'unité de conversion de puissance électrique (11) à la source (20) d'alimentation en courant alternatif jusqu'à la valeur maximale admissible (A_{MAX}), et stocke une puissance électrique correspondant à une différence entre une puissance électrique régénérée vers le condensateur (14) et une puissance électrique régénérée de l'unité de conversion de puissance électrique (11) à la source (20) d'alimentation en courant alternatif dans le condensateur (14).

2. Machine de moulage par injection (1) incluant le convertisseur à récupération de source d'alimentation (10, 10A) selon la revendication 1.

3. Machine de moulage par injection (1) selon la revendication 2, dans laquelle la unité de régulation de courant alternatif (16, 16A) délivre à la unité de conversion de puissance électrique (11) un signal de régulation pour annuler la différence de tension.

4. Machine de moulage par injection (1) selon la revendication 2, dans laquelle l'unité de régulation de courant alternatif (16A) délivre un signal de régulation, qui est basé sur une différence de tension (V_{DIFF}) entre une tension de continu (V_{CRT}) détectée par l'unité (15) de détection de tension de courant continu et une tension prédéterminée (V_{CRG}) ainsi que sur une variance temporelle de la tension de courant continu, vers l'unité de conversion de puissance électrique (11), et régulation un courant alternatif circulant entre la source (20) d'alimentation en courant alternatif et la unité de conversion de puissance électrique (11).

5. Machine de moulage par injection (1) selon la revendication 2, dans laquelle le signal de régulation est délivré de sorte qu'un courant alternatif ne puisse pas circuler de la source (20) d'alimentation en courant alternatif vers l'unité de conversion de puissance électrique (11), si la tension de courant continu est supérieure à la tension prédéterminée (V_{CRG}).
